Europäisches Patentamt

European Patent Office

Office européen des brevets

(11) Numéro de publication : **0 519 833 A1**

(19)

(12) # DEMANDE DE BREVET EUROPEEN

(21) Numéro de dépôt : **92401724.7**

(22) Date de dépôt : **19.06.92**

(51) Int. Cl.⁵ : **H04L 12/40**

(30) Priorité : **19.06.91 FR 9107524**

(43) Date de publication de la demande :
**23.12.92 Bulletin 92/52**

(84) Etats contractants désignés :
**BE CH DE ES FR GB IT LI NL**

(71) Demandeur : **GEC ALSTHOM SA**
**38, avenue Kléber**
**F-75116 Paris (FR)**

(72) Inventeur : **Freville , Patrick**
**48, rue René Char**
**F-93140 Bondy (FR)**
Inventeur : **Pouzin, Rémy**
**38, rue Pigalle**
**F-75009 Paris (FR)**
Inventeur : **Troger, Laurent**
**254, avenue Gabriel Péri**
**F-78360 Montesson (FR)**

(74) Mandataire : **Weinmiller, Jürgen et al**
**Lennéstrasse 9 Postfach 24**
**W-8133 Feldafing (DE)**

(54) **Système de transmission d'un système informatique embarqué.**

(57)    L'invention concerne le système de transmission d'un réseau local (1) permettant l'échange d'informations numériques entre des équipements (2) répartis au sein d'un système informatique embarqué. Le système de transmission du réseau local (1) est composé d'une ligne de transmission ouverte formée de liaisons point-à-point bidirectionnelles (3) reliant les équipements à leurs voisins, et des moyens (4) de connexion des équipements à la ligne de transmission. Chaque équipement est connecté à la ligne de transmission par un sous-système (4) assurant l'émission, la réception et la propagation des signaux. Au sein de chaque équipement, ce sous-système (4) émet les informations numériques simultanément vers ses deux voisins. Le sous-système (4) sélectionne le premier signal reçu d'un des segments de la ligne de transmission auxquels il est raccordé, le remet en forme pour le propager sur le segment opposé, et le transmet à l'équipement.

L'invention est mise en oeuvre à bord de véhicules ferroviaires. Les segments de la ligne de transmission sont constitués de paire torsadée blindée. Les liaisons point-à-point sont redondantes. Le code de transmission est le code FM0 (Manchester différentiel). L'accès à la ligne de transmission est régi par le protocole défini par la norme ISO 8802.4 (bus à jeton).

FIG. 1

L'invention concerne le système de transmission d'un système informatique embarqué, qui fut conçu pour réaliser un réseau local à bord de véhicules ferroviaires. L'objectif du réseau local était de substituer une ligne de transmission unique aux innombrables liaisons filaires qui reliaient autrefois les organes de contrôle et de commande au poste de conduite. Dans un réseau local, cette ligne de transmission est partagée par des équipements proches des organes de contrôle et de commande et permet d'acheminer les informations devant être échangées par ces équipements.

Un système de transmission utilisé au sein d'un réseau local embarqué à bord de véhicules ferroviaires est connu sous le nom déposé TORNAD, et décrit dans un article de D. DUHOT intitulé "TORNAD" Réseau Informatique Haute Disponibilité, publié dans la revue Alsthom, numéro 8, 1987.

L'environnement ferroviaire impose un certain nombre de contraintes, prises en compte lors de la conception d'un réseau local. La présence de fortes perturbations électromagnétiques a motivé le choix d'une ligne de transmission formée de paire torsadée blindée. L'immunité au bruit est assurée dans une certaine mesure par le choix d'un codage sans composante continue. Le besoin d'une isolation galvanique élevée (1500 V) entre l'électronique et le système de câblage est satisfait par l'utilisation de transformateurs d'isolement. Les distances importantes (jusqu'à 500 mètres) entre les équipements d'extrémité de certains véhicules ferroviaires imposent que les signaux soient remis en forme.

Le système de l'art antérieur prenait également en compte les contraintes de l'environnement ferroviaire, mais comportait un certain nombre d'inconvénients, liés à la topologie en anneau et à l'utilisation conjointe d'un protocole d'anneau à jeton. Les informations reçues devaient être interprétées avant d'être réémises, ce qui grevait significativement les performances (traversée d'un équipement en 25 microsecondes). Une rupture de la ligne de transmission conduisait de plus à modifier le protocole régissant les échanges entre les équipements ainsi que le passage du jeton.

Le système de transmission selon l'invention adopte une topologie en bus, dans laquelle les informations émises à l'initiative d'un équipement sont reçues par l'ensemble des autres équipements. Ce système de transmission est composé d'une ligne de transmission et de sous-systèmes, hébergés au sein de chaque équipement, qui connectent les équipements à cette ligne de transmission. La ligne de transmission est formée d'une chaîne ouverte de liaisons point-à-point bidirectionnelles. Ces sous-systèmes sont désignés dans ce qui suit par le terme « tête de ligne ». Les signaux sont remis en forme par des répéteurs intégrés au sein de la tête de ligne de chaque équipement. Le souci de ne pas propager le bruit le long de la ligne de transmission a conduit à associer la fonction de répéteur à la fonction de reconnaissance de signaux de préambule. La disponibilité du système de transmission est accrue par la redondance de la ligne de transmission. Enfin, l'accès à la ligne de transmission en un temps borné est garanti à chaque équipement par l'utilisation du protocole de bus à jeton défini par la norme ISO 8802.4.

Lorsqu'une tête de ligne émet des signaux à l'initiative de l'équipement au sein duquel elle est hébergée, les signaux sont transmis simultanément sur chacun des segments de la ligne de transmission auxquels la tête de ligne est raccordée.

Chaque tête de ligne assure la propagation des signaux le long de la ligne de transmission, de telle sorte que les signaux puissent être reçus par tous les équipements. Chaque tête de ligne assure également la remise en forme des signaux, en les amplifiant et en les resynchronisant.

Une tête de ligne est à l'écoute des signaux sur chacun des segments de la ligne de transmission auxquels elle est raccordée. Dès qu'un signal est reçu d'un des segments, la tête de ligne s'interdit de recevoir du segment opposé, et propage sur ce segment le signal reçu. Si des signaux sont reçus simultanément de chacun des segments de la ligne de transmission, la tête de ligne choisit arbitrairement le signal reçu d'un des segments et ignore le signal reçu du segment opposé.

Le système de transmission selon l'invention combine donc des aspects d'une topologie en bus (ligne de transmission bidirectionnelle, réception d'informations identiques par tous les équipements) à des aspects d'une topologie en anneau (liaisons point-à-point, remise en forme des signaux par chaque équipement).

La redondance, optionnelle, de la ligne de transmission accroît la disponibilité du système de transmission.

L'invention a donc pour objet un système de transmission d'un signal entre des équipements d'un système informatique embarqué, les équipements étant connectés à une ligne de transmission, la ligne de transmission étant composée de liaisons point-à-point, caractérisé en ce que les liaisons point-à-point sont bidirectionnelles et forment une chaîne ouverte.

L'invention sera mieux comprise et d'autres avantages et caractéristiques particulières apparaîtront à la lecture de la description qui suit, donnée à titre d'exemple non limitatif, accompagnée des figures annexées, parmi lesquelles:

- la figure 1 représente une vue globale du système de transmission selon l'invention,
- les figures 2 et 3 représentent une ligne de transmission formée de liaisons point-à-point, avec ou sans redondance de la ligne de transmission,
- les figures 4 et 5 illustrent l'émission d'un signal par un équipement, avec ou sans redondance de la ligne de transmission,
- les figures 6, 7 et 8 illustrent la réception sélective d'un signal par un équipement, avec ou sans redondance de la ligne de transmission.
- la figure 9 représente le mécanisme d'aiguillage des signaux au sein de la tête de ligne.

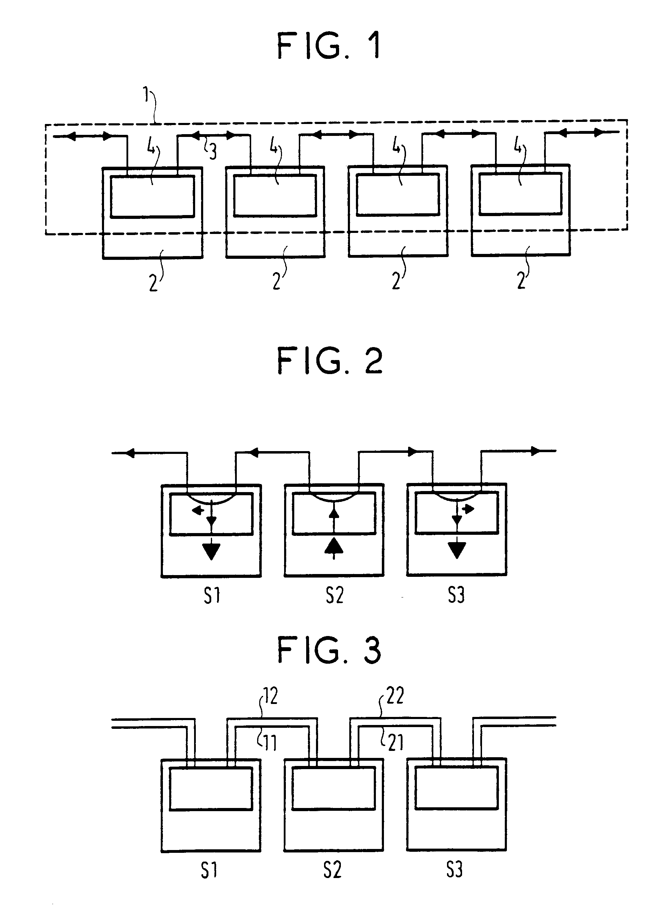

Sur la figure 1 sont représentés des équipements 2 reliés par la ligne de transmission 3, à laquelle chacun des équipements est connecté par l'intermédiaire d'une tête de ligne 4 assurant l'émission, la réception et la propagation des signaux.

Sur la figure 2 sont représentés trois équipements S1, S2, S3, connectés à la ligne de transmission selon l'invention. Un signal émis par la tête de ligne de l'équipement S2 est acheminé le long de la ligne de transmission. Les têtes de lignes des équipements S1 et S3 reçoivent le signal d'un des segments de la ligne de transmission et le propagent après remise en forme sur le segment opposé.

Sur la figure 3 est représentée la redondance de la ligne de transmission. Les deux segments 11 et 12 relient la tête de ligne de l'équipement S2 à la tête de ligne de l'équipement S1, et les deux segments 21 et 22 relient la tête de ligne de l'équipement S2 à la tête de ligne de l'équipement S3. La réception et l'émission sur chacun des quatre segments 11, 12, 21, 22 peuvent être inhibées ou activées sous le contrôle de l'équipement S2.

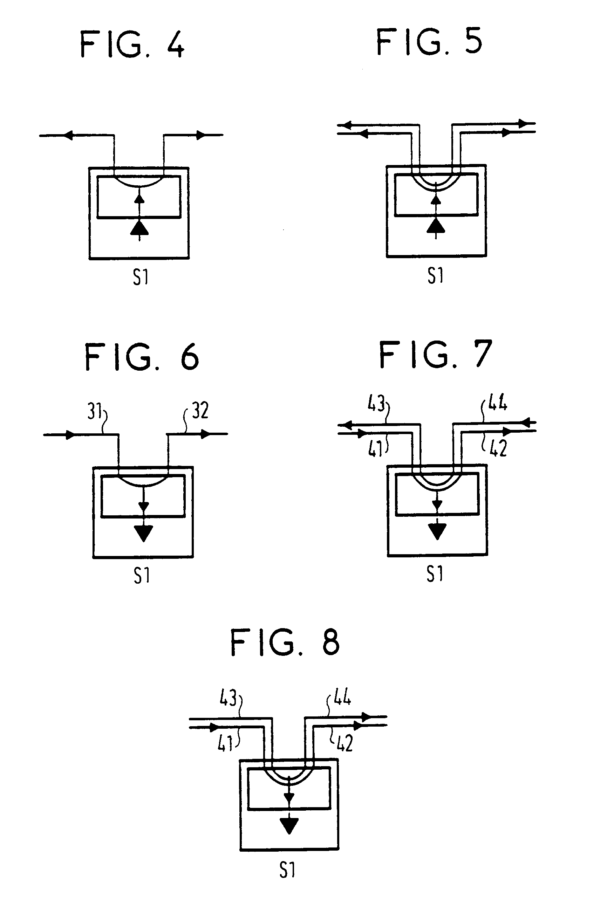

La tête de ligne d'un équipement émet ses signaux sur chacun des segments de la ligne de transmission auxquels elle est raccordée. Ceci est représenté, pour un équipement S1, sur la figure 4 dans le cas d'une ligne de transmission sans redondance, et sur la figure 5 dans le cas d'une ligne de transmission avec redondance. Pendant la durée de l'émission des signaux, la tête de ligne s'interdit de recevoir des signaux de chacun des segments de la ligne de transmission auxquels elle est raccordée.

Un équipement est prêt à recevoir des signaux sur chacun des segments de la ligne de transmission auxquels il est raccordé. Ceci est représenté, pour un équipement S1, sur la figure 6 dans le cas d'une ligne de transmission sans redondance, et sur les figures 7 et 8 dans le cas d'une ligne de transmission avec redondance.

Dans le cas d'une ligne de transmission sans redondance, la tête de ligne de l'équipement S1 sélectionne le premier signal reçu de l'un des deux segments de la ligne de transmission (segment 31 de la figure 6) et transmet le signal à l'équipement. La tête de ligne s'interdit de recevoir du segment opposé 32 et propage sur ce segment le signal reçu après l'avoir remis en forme. Cette polarisation dans le sens défini par le premier signal reçu dure tant que ce signal est présent.

Dans le cas d'une ligne de transmission avec redondance, la tête de ligne de l'équipement S1 sélectionne le premier signal reçu de l'un des quatre segments de la ligne de transmission (segment 41 de la figure 7), et transmet le signal à l'équipement. La tête de ligne s'interdit de recevoir du segment opposé 42 et propage sur ce segment le signal reçu après l'avoir remis en forme. Cette polarisation dans le sens défini par le premier signal reçu dure tant que ce signal est présent. Pendant ce temps, un signal peut être reçu d'un des segments 43 ou 44, par exemple le segment 44. Ce second signal n'est pas transmis à l'équipement. La tête de ligne s'interdit alors de recevoir du segment opposé 43 et propage sur ce segment le signal reçu du segment 44 après l'avoir remis en forme. Cette polarisation dans le sens défini par le second signal reçu dure tant que ce signal est présent.

Une autre politique peut être mise en oeuvre par la tête de ligne après qu'elle a sélectionné le premier signal reçu d'un des quatre segments de la ligne de transmission (segment 41 de la figure 8). La tête de ligne transmet le signal reçu à l'équipement, s'interdit de recevoir des autres segments 42, 43 et 44, et propage le signal reçu sur les segments 42 et 44 après l'avoir remis en forme. Cette polarisation dans le sens défini par le premier signal reçu dure tant que ce signal est présent.

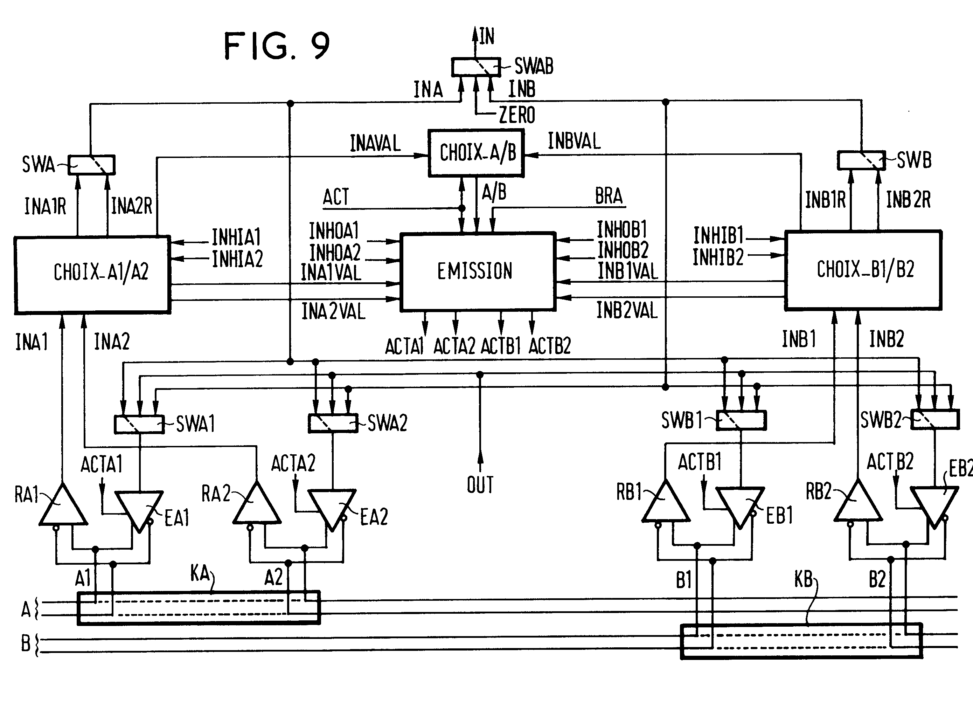

La figure 9 illustre les mécanismes d'aiguillage des signaux au sein de la tête de ligne du système de transmission selon l'invention, muni de la redondance de la ligne de transmission. La ligne de transmission y est représentée par deux paires torsadées (A et B). Les relais KA et KB permettent d'assurer la continuité électrique de la ligne de transmission lorsque l'équipement est hors-tension ou souhaite s'isoler en cas de dysfonctionnement. Lorsque l'équipement n'est pas isolé de la ligne de transmission, il est raccordé aux quatre segments A1, A2, B1 et B2. La réception des signaux s'effectue par le biais des récepteurs différentiels RA1, RA2, RB1 et RB2. L'émission des signaux s'effectue par le biais des émetteurs différentiels EA1, EA2, EB1 et EB2, qui sont activés par les lignes de contrôle ACTA1, ACTA2, ACTB1 et ACTB2 respectivement.

Sept aiguilleurs et quatre blocs fonctionnels sont représentés sur la figure 9. Le bloc CHOIX_A1/A2 (respectivement CHOIX_B1/B2) pilote l'aiguilleur SWA (respectivement SWB) selon l'origine (A1 ou A2, respectivement B1 ou B2) du signal reçu. Le bloc CHOIX_A/B pilote l'aiguilleur SWAB selon l'origine (A ou B) du signal reçu. Enfin, le bloc ÉMISSION pilote les aiguilleurs SWA1, SWA2, SWB1 et SWB2 de façon à émettre le signal provenant de l'équipement ou à propager le signal reçu de l'un des segments A1, A2, B1 ou B2.

L'équipement présente le signal à émettre sur sa sortie OUT, et le valide au moyen de la ligne de contrôle ACT. L'information ACT agit sur le bloc CHOIX_A/B, qui pilote l'aiguilleur SWAB de telle sorte qu'aucun signal ne soit transmis à l'équipement sur son entrée IN (SWAB est en position ZÉRO). L'information ACT agit également sur le bloc ÉMISSION, qui pilote les aiguilleurs SWA1, SWA2, SWB1 et SWB2 de façon à présenter le signal de sortie OUT à l'entrée des émetteurs EA1, EA2, EB1 et EB2. Ces émetteurs sont activés par les lignes de contrôle ACTA1, ACTA2, ACTB1 et ACTB2 en fonction des informations de contrôle INHOA1, INHOA2, INHOB1 et INHOB2 que l'équipement peut valider pour inhiber sélectivement l'émission sur les segments A1, A2, B1 et B2.

Lorsque l'équipement n'a pas de signal à émettre, la ligne de contrôle ACT n'est pas vidée. En l'absence de réception de signal, l'aiguilleur SWAB reste en position ZÉRO, et l'équipement ne reçoit rien. Les lignes de contrôle ACTA1, ACTA2, ACTB1 et ACTB2 n'activent pas les émetteurs EA1, EA2, EB1 et EB2. La position des aiguilleurs SWA1, SWA2, SWB1 et SWB2 est indifférente.

Le bloc CHOIX_A1/A2 (respectivement CHOIX_B1/B2) reçoit les signaux provenant de la ligne de transmission, INA1 et INA2 (respectivement INB1 et INB2) présents en sortie des récepteurs RA1 et RA2 (respectivement RB1 et RB2), et les remet en forme en vue de leur transmission à l'équipement et de leur propagation. Les blocs CHOIX_A1/A2 et CHOIX_B1/B2 comportent des registres à décalage permettant de comparer, après échantillonnage, les signaux reçus à des motifs prédéfinis (début de trame, fin de trame). Ces blocs vérifient également que les signaux reçus satisfont les critères d'amplitude requis. L'équipement peut valider les informations de contrôle INHIA1, INHIA2, INHIB1 et INHIB2, pour inhiber sélectivement la réception sur les segments A1, A2, B1 et B2. Le bloc CHOIX_A1/A2 (respectivement CHOIX_B1/B2) agit en fonction de ces informations de contrôle pour piloter l'aiguilleur SWA (respectivement SWB) selon l'origine du premier signal reçu (INA1 ou INA2, respectivement INB1 ou INB2). Le premier signal reçu est remis en forme et présenté en sortie du bloc sur l'une des lignes INA1R ou INA2R (respectivement INB1R ou INB2R). En cas de réception simultanée de signaux par les entrées INA1 et INB2 (respectivement INB1 et INB2), un choix arbitraire est effectué. Le bloc CHOIX_A1/A2 (respectivement CHOIX_B1/B2) valide le signal sélectionné au moyen de la ligne de contrôle INAVAL (respectivement INBVAL), et indique son choix en vidant une et une seule des lignes de contrôle INA1VAL ou INA2VAL (respectivement INB1VAL ou INB2VAL).

Le bloc CHOIX_A/B pilote l'aiguilleur SWAB en fonction des informations INAVAL et INBVAL, selon l'origine (A ou B) du premier signal reçu. En cas de réception simultanée de signaux sur A et B, un choix arbitraire est effectué. Le bloc CHOIX_A/B indique son choix au moyen de la ligne de contrôle A/B destinée au bloc ÉMISSION.

Le bloc ÉMISSION pilote les aiguilleurs SWA1, SWA2, SWB1 et SWB2 de manière à propager les signaux reçus en fonction d'une part de la politique définie par l'équipement au moyen de l'information de contrôle BRA (*brassage*), d'autre part des informations de contrôle INHOA1, INBOA2, INHOB1 et INHOB2 que l'équipement peut valider pour inhiber sélectivement l'émission sur les segments A1, A2, B1 et B2. Les entrées INA1VAL et INA2VAL d'une part, INB1VAL et INB2VAL d'autre part, indiquent la présence sur les lignes INA et/ou INB de signaux devant être propagés.

Si l'information de contrôle BRA n'est pas validée, la propagation des signaux est effectuée de la manière suivante: un signal reçu du segment A1 (respectivement B1) est propagé sur le segment A2 (respectivement B2), et un signal reçu du segment A2 (respectivement B2) est propagé sur le segment A1 (respectivement B1). Dans ce cas, les couples d'aiguilleurs SWA1/SWA2 et SWB1/SWB2 sont pilotés indépendamment l'un de l'autre. Le bloc ÉMISSION présente le signal INA (respectivement INB) à l'entrée des émetteurs EA1 et EA2 (respectivement EB1 et EB2). Ces émetteurs sont activés par les lignes de contrôle ACTA1 et ACTA2 (respectivement ACTB1 et ACTA2) en fonction des informations de contrôle INHOA1 et INHOA2 (respectivement INHOB1 et INHOB2), et des entrées de validation INA1VAL et INA2VAL (respectivement INB1VAL et INB2VAL). Cette politique de propation des signaux est celle qui est représentée à la figure 7.

Si l'information de contrôle BRA est validée, la propagation des signaux est effectuée de la manière suivante: un signal reçu du segment A1 ou du segment B1 est propagé sur les segments A2 et B2, et un signal reçu du segment A2 ou du segment B2 est propagé sur les segments A1 et B1. Le conflit résultant de la réception simultanée de signaux des segments A1 ou A2 d'une part, B1 ou B2 d'autre part, est résolu en adoptant le choix effectué par le bloc CHOIX_A/B, tel qu'il est indiqué par l'information de contrôle A/B. Les aiguilleurs SWA1, SWA2, SWB1 et SWB2 sont alors pilotés de façon à présenter soit le signal INA soit le signal INB à l'entrée des émetteurs EA1, EA2, EB1 et EB2. Ces émetteurs sont activés par les lignes de contrôle ACTA1, ACTA2, ACTB1 et ACTB2 en fonction des informations de contrôle INHOA1, INHOA2, INHOB1 et INHOB2, et des entrées de validation INA1VAL, INA2VAL, INB1VAL, INB2VAL et A/B. Cette politique de propation des signaux est celle qui est représentée à la figure 8.

La mise en oeuvre de l'invention à bord de véhicules ferroviaires (liaisons point-à-point réalisées au moyen de paire torsadée blindée, code de transmission FM0, remise en forme des signaux par des répéteurs) présente de bonnes caractéristiques de performances et de qualité. La tête de ligne propage un signal d'un segment de la ligne de transmission au segment opposé en environ 3 microsecondes. Sur un segment de 500 mètres, le taux d'erreur bit est de $10^{-9}$

pour un niveau de bruit égal à 200 millivolts efficaces. Enfin, muni de la redondance de la ligne de transmission, le système selon l'invention tolère une coupure d'un segment sans aucune altération du fonctionnement du protocole de bus à jeton utilisé.

## Revendications

**1/** Système de transmission d'un signal entre des équipements d'un système informatique embarqué, les équipements étant connectés à une ligne de transmission composée de liaisons point-à-point, caractérisé en ce que les liaisons point-à-point sont bidirectionnelles et forment une chaîne ouverte.

**2/** Système de transmission selon la revendication 1, caractérisé en ce que le signal est propagé d'une liaison à une liaison adjacente par le biais d'un répéteur associé à chaque équipement.

**3/** Système de transmission selon l'une des revendications 1 ou 2, caractérisé en ce que les liaisons point-à-point sont réalisées au moyen de paire torsadée blindée.

**4/** Système de transmission selon l'une quelconque des revendications 1 à 3, caractérisé en ce que les liaisons point-à-point sont redondantes.

**5/** Système de transmission selon l'une quelconque des revendications 1 à 4, caractérisé en ce que l'accès à la ligne de transmission est régi par un protocole de bus à jeton.

**6/** Système de transmission selon la revendication 5, caractérisé en ce que le protocole de bus à jeton est le protocole défini par la norme ISO 8802.4.

# FIG. 1

# FIG. 2

# FIG. 3

# FIG. 4

S1

# FIG. 5

S1

# FIG. 6

31    32

S1

# FIG. 7

43    44
41    42

S1

# FIG. 8

43    44
41    42

S1

# FIG. 9

EP 0 519 833 A1

**Office européen des brevets**

# RAPPORT DE RECHERCHE EUROPEENNE

Numero de la demande

| DOCUMENTS CONSIDERES COMME PERTINENTS | | | EP 92 40 1724 |
|---|---|---|---|

| Catégorie | Citation du document avec indication, en cas de besoin, des parties pertinentes | Revendication concernée | CLASSEMENT DE LA DEMANDE (Int. Cl.5 ) |
|---|---|---|---|
| X A | WO-A-8 501 626 (VECTOR GRAPHIC INC.)<br><br>* page 3, ligne 22 - page 4, ligne 29 *<br>* page 7, ligne 8 - page 8, ligne 34; figures 1,2,3,6 *<br>--- | 1-3<br>5,6 | H04L12/40 |
| A | IEEE INSTRUMENTATION AND MEASUREMENT TECHNOLOGY CONFERENCE,<br>20 Avril 1988, NEW YORK,US<br>pages 20 - 25;<br>R. SCHUH: 'An overwiuw of the 1553 bus with testing and simulation considerations'<br>* page 21; figures 1,3 *<br>--- | 1,3-6 | |
| A | IBM TECHNICAL DISCLOSURE BULLETIN,<br>vol. 27, no. 4A, Septembre 1984, NEW YORK US<br>pages 1993 - 1996;<br>W.KRUMREIN: 'open-line local area network'<br>* le document en entier *<br><br>----- | 1-2,5,6 | |

| | DOMAINES TECHNIQUES RECHERCHES (Int. Cl.5 ) |
|---|---|
| | H04L |

Le présent rapport a été établi pour toutes les revendications

| Lieu de la recherche | Date d'achèvement de la recherche | Examinateur |
|---|---|---|
| LA HAYE | 09 SEPTEMBRE 1992 | DE LA FUENTE DELAGUA |

EPO FORM 1503 03.82 (P0402)